# EUROPÄISCHE PATENTSCHRIFT

(11) **EP 3 423 300 B1**
(45) Veröffentlichungstag und Bekanntmachung des Hinweises auf die Patenterteilung: **09.09.2020**
(21) Anmeldenummer: 17700977.6
(22) Anmeldetag: 20.01.2017
(51) Int. Cl.: B60J 10/265

(54) **SCHEIBENEINFASSUNG**
WINDOW MOUNT
BORDURE DE FENÊTRE

(30) Priorität: 04.03.2016 DE 102016002684
(43) Veröffentlichungstag der Anmeldung: 09.01.2019
(73) Patentinhaber: Cadea Gesellschaft Für Anwendung Und Realisierung Computerunterstützter Systeme Mbh, 82223 Eichenau (DE)
(72) Erfinder: ERTL, Harald, 82223 Eichenau (DE)
(74) Vertreter: Grünecker Patent- und Rechtsanwälte PartG mbB
(86) Internationale Anmeldenummer: PCT/EP2017/051174
(87) Internationale Veröffentlichungsnummer: WO 2017/148615

(56) Entgegenhaltungen:
- EP-A1- 0 712 747
- WO-A1-91/12134
- DE-A1-102007 012 516
- DE-A1-102011 111 209
- DE-U1-202013 009 793

## Beschreibung

Die Erfindung bezieht sich auf eine Scheibeneinfassung für eine seitliche Verglasung eines Personenkraftwagens, mit mindestens einer Dichtung, die ein oder mehrere Dichtungsprofile umfaßt und mit einem mit der Dichtung zusammenwirkenden Trägerprofil aus Kunststoff sowie einer das Trägerprofil abdeckenden Zierblende mit metallischer Sichtfläche.

Bei rahmenlosen Seitenscheiben von Personenkraftwagen, insbesondere bei sog. Coupes wird bevorzugt, dass die Zierblende möglichst fugenfrei um die seitliche Verglasung herumgezogen wird.

Eine solche Scheibeneinfassung ist beispielsweise in der EP 2 352 658 B1 beschrieben. Diese bekannte Scheibeneinfassung ist optisch sehr ansprechend, weil sie Stoßstellen des Trägerprofils durch eine metallene Zierblende überbrückt und damit unsichtbar werden läßt. Nachteilig ist allerdings, dass die Zierblende auf das Trägerprofil aufgebördelt werden muss, was verhältnismäßig aufwändig ist.

Die EP 712 747 A1 zeigt ein Dichtungsprofil mit einem Klemmbereich aus Hartgummi zur Befestigung an einem Türrahmen und mit Dichtlippen zur Abdichtung einer Türscheibe sowie zur Abdichtung gegenüber einem Dach eines Fahrzeugs. Auf einem Bereich des Dichtungsprofils ist, bspw. durch Galvanisieren, eine Metallbeschichtung aufgebracht.

Ferner zeigt die DE 10 2007 012 516 A1 ein Verkleidungs- und/oder Zierbauteil mit einem Trägerelement und einem Zierelement, wobei das Trägerelement und das Zierelement einstückig als Zwei-Komponenten-Spritzgussteil ausgebildet sind und das Zierelement eine metallisch glänzende Oberfläche aufweist, die mittels eines galvanischen Prozesses aufgebracht ist.

Die DE 20 2013 009 793 U1 offenbart ein Bauteil aus Kunststoff für die Automobilindustrie, bspw. für ein Bedienelement wie einen Start/Stop-Knopf oder Bedienelemente für die Fahrzeugbeleuchtung oder Klimaregulierung. Das Bauteil wird in einem Spritzgussverfahren hergestellt und an seiner Oberfläche galvanisch beschichtet.

Aufgabe der vorliegenden Erfindung ist es daher, eine Scheibeneinfassung der eingangs genannten Art zur Verfügung zu stellen, die unter Beibehaltung der vorgenannten Vorteile kostengünstiger und unter Einsparung von Gewicht herzustellen ist. Diese Aufgabe wird erfindungsgemäß dadurch gelöst, dass auch die Zierblende als Spritzgußteil aus Kunststoff ausgebildet ist, wobei das Trägerprofil und die Zierblende gesonderte Bauteile darstellen, die stoffschlüssig miteinander verbunden sind, und wobei ferner die Sichtfläche der Zierblende galvanisiert ist. Das Galvanisieren von Kunststoffen ist inzwischen geläufig. Der Kunststoff wird bekeimt, wonach eine Kupferschicht abgeschieden und darauf dann eine Chromschicht aufgebracht wird. Das Aufbördeln eines Metallteils als Zierblende auf das Trägerprofil kann somit entfallen.

Zwar können Trägerprofil und Zierblende einstückig ausgebildet sein. Eine solche Vorgehensweise bietet sich immer dann an, wenn das Trägerprofil keine zu komplexe Form aufweist und die Trennebenen des Formwerkzeuges so gewählt werden können, dass die später zu galvanisierende Sichtfläche der Zierblende frei von einer Trennfuge ist.

Um auch kompliziertere Trägerprofile verwirklichen zu können, ist es jedoch eine besonders bevorzugte Lösung, dassdie Zierblende und das Trägerprofil miteinander stoffschlüssig verbunden ist. Auf diese Weise kann das Werkzeug für das Trägerprofil so ausgebildet sein, dass dort, wo das Trägerprofil mit der Zierblende verbunden wird, durchaus eine Trennfuge im Werkzeug sein kann. Der dabei entstehende Grat wird durch das stoffschlüssige Verbinden mit der Zierblende abgedeckt. Als stoffschlüssiges Verbinden bieten sich an sich bekannte Verfahren wie Laserschweißen, Reibschweißen und auch Ultraschallverschweißen an. Gemäß einer Alternative kann auch vorgesehen sein, dass die Zierblende mit dem Trägerprofil verklebt ist. Besonders bevorzugt ist, wenn in den Fällen, in denen das Trägerprofil Stoßstellen aufweist, die Zierblende so dimensioniert ist, dass diese Stoßstellen des Trägerprofils überdeckt werden. Besonders bevorzugt wird zudem, wenn die Zierblende und das Trägerprofil aus einem ABS-Kunststoff bestehen.

Um optische Effekte zu erzielen können auf der Rückseite der Zierblende auch LED's angeordnet sein. Besonders bevorzugt ist die galvanische Schicht im Bereich der LED's unterbrochen. Der Kunststoff ist in diesem Fall durchscheinend.

Die Erfindung bezieht sich zudem auch auf ein Verfahren zum Herstellen einer Scheibeneinfassung, welche sich dadurch auszeichnet, dass das Trägerprofil und die Zierblende als separate Teile spritzgegossen und anschließend stoffschlüssig miteinander verbunden werden und wobei die Sichtfläche der Zierblende aufgeraut, bekeimt und galvanisiert wird. Bei diesem Verfahren werden Trägerprofil und Zierblende zuerst miteinander verbunden und dann wird die Sichtfläche der Zierblende galvanisiert. Statt Verschweißen von Trägerprofil und Zierblende können Trägerprofil und Zierblende auch anderweitig miteinander verbunden oder gar einstückig hergestellt werden.

Bei einer Variante zu dem Verfahren ist vorgesehen, dass Trägerprofil und Zierblende als separate Teile spritzgegossen werden, wonach die Zierblende aufgeraut, bekeimt und galvanisiert wird, wonach dann Zierblende und Trägerprofil miteinander stoffschlüssig verbunden oder miteinander verklebt werden. Bei diesem Verfahren wird also zunächst die Galvanisierung der Zierblende vorgenommen, wonach das Verbinden zwischen Trägerprofil und Zierblende erfolgt.

Als geeignete Verfahren für das Verbinden von Trägerprofil und Zierblende bieten sich Laserschweißen oder Ultraschallschweißen an.

Im Folgenden wird ein Ausführungsbeispiel der Erfindung anhand einer Zeichnung näher erläutert. Es zeigen:
Fig. 1 einen Personenkraftwagen in einer Seitenansicht
Fig. 2 einen Schnitt durch die Scheibeneinfassung des Personenkraftwagens nach Fig. 1 entlang der Linie II-II
Fig. 3 einen Schnitt durch die Scheibeneinfassung entlang der Linie III-III
Fig. 4 einen Schnitt durch die Scheibeneinfassung entlang der Linie IV-IV
Fig. 5 einen Schnitt durch die Scheibeneinfassung entlang der Linie V-V
Fig. 6 einen Schnitt durch die Scheibeneinfassung entlang der Linie VI-VI und
Fig. 7 einen Schnitt durch die Scheibeneinfassung entlang der Linie VII-VII.

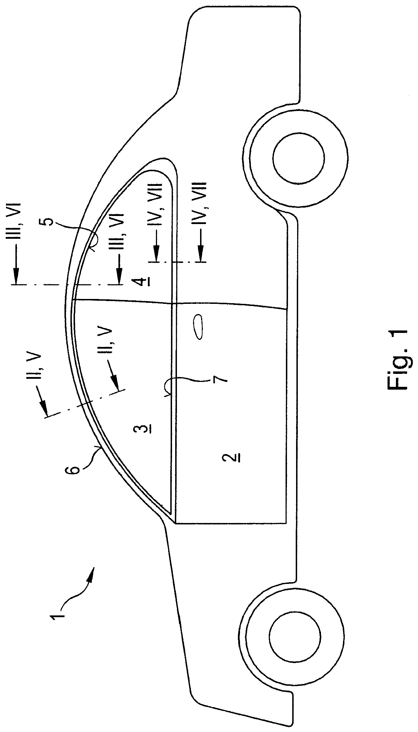

Bei dem in Fig. 1 gezeigten PKW handelt es sich um ein sog. Coupe 1 mit einer Türe 2 und einer Seitenscheibe 3, die in der Türe 1 versenkbar ist. Hinter der Türe 2 befindet sich eine feststehende Seitenscheibe 4. Beide Seitenscheiben 3 und 4 sind durch eine Scheibeneinfassung 5 eingefasst, die sich entlang des oberen Dachholmes 6 und entlang der unteren Kante der Scheibe 4 bzw. des Schachtes 7 der Türe 2 entlang zum vorderen Bereich des Fahrzeuges erstreckt.

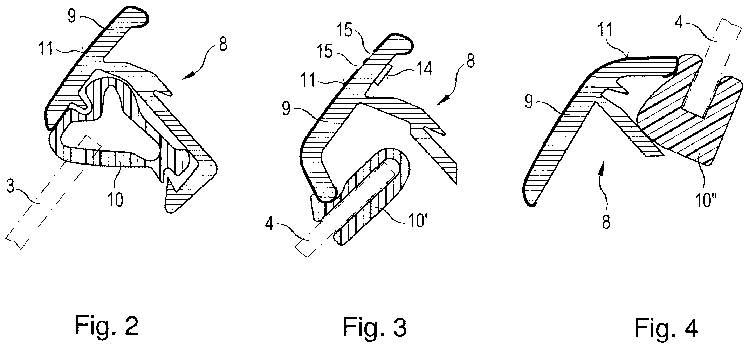

Betrachtet man die Fig. 2, so erkennt man den Querschnitt durch die Scheibeneinfassung im Bereich des Schnitts II-II. In diesem Querschnitt ist andeutungsweise die Seitenscheibe 3 dargestellt, sowie ein Trägerprofil 8 für die diversen Dichtungen, mit denen die Scheiben gegenüber dem Fahrzeug abgedichtet werden. Der Übersichtlichkeit halber ist in der Fig. 2 lediglich die Dichtung 10 dargestellt, die mit der höhenbeweglichen Seitenscheibe 3 zusammenwirkt. Die anderen Dichtungen sind der Übersichtlichkeit halber weggelassen.

Das Trägerprofil 8 weist auf seiner zur Karosserieaußenseite gewandten Seite eine Zierblende 9 auf, die einstückig mit dem Trägerprofil 8 ausgebildet ist. Die Zierblende 9 ist auf ihrer Außenseite, also ihrer Sichtfläche galvanisiert. Genaugenommen wird durch einen galvanischen Prozess eine metallene Schicht 11 abgeschieden.

Fig. 3 zeigt die Scheibeneinfassung in einer Schnittdarstellung entlang der Linie III-III, also im Bereich der festen Seitenscheibe 4. Dort ist der Rand der Seitenscheibe mit einer Dichtung 10' umspritzt. Die Dichtung 10' dichtet die Seitenscheibe gegen die Zierblende 9 ab. Das Trägerprofil 8 ist auch in diesem Bereich einstückig mit der Zierblende 9 ausgebildet, die auch in diesem Bereich mit der durch Galvanisieren aufgebrachten metallischen Schicht 11 versehen ist.

Auf der Rückseite der Zierblende sind LEDs 14 angeordnet, während die metallene Schicht 11 Unterbrechungen aufweist. Der Kunststoff ist in diesem Fall durchscheinen, so dass Lichteffekte erzielbar sind.

Gleiches gilt auch für die Scheibeneinfassung im Bereich der Querschnittsansicht IV-IV, also im Bereich des Schachts. Die Umspritzung 10" dient zur Befestigung des Trägerprofils.

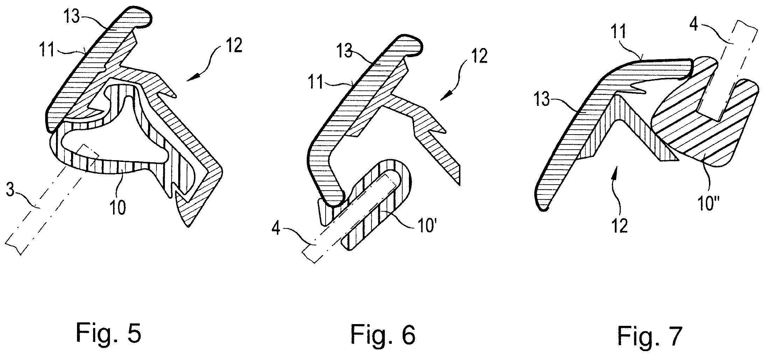

Die Fig. 5 bis 7 zeigen eine Variante der Scheibeneinfassung zu den Fig. 2 bis 4. Wie aus den Zeichnungen ersehen werden kann, ist der hauptsächliche Unterschied, dass das Trägerprofil 12 und die Zierblende 13 gesonderte Bauteile darstellen, die allerdings miteinander verbunden sind. Genaugenommen sind bei dem hier dargestellten Ausführungsbeispiel das Trägerprofil 12 und die Zierblende 13 durch übliche Schweißverfahren, wie beispielsweise Ultraschallschweißen oder Laserschweißen stoffschlüssig miteinander verbunden. Ansonsten unterscheiden sich die Anordnungen gegenüber der Darstellung in den Fig. 2 bis 4 nicht.

Im Folgenden werden nun beispielhaft zwei Verfahren zum Herstellen einer erfindungsgemäßen Scheibeneinfassung näher erläutert.

Bei der Scheibeneinfassung gemäß den Fig. 2 bis 4 werden Trägerprofil und Zierblende einstückig spritzgegossen. Anschließend wird die Sichtfläche der Sichtblende angeraut und in herkömmlicher Weise bekeimt, wonach durch galvanisches Abscheiden eine Chromschicht 11 aufgebracht wird.

Im Unterschied hierzu wird bei dem Ausführungsbeispiel gemäß den Fig. 5 bis 7 das Trägerprofil 12 als separates Teil spritzgegossen, ebenso die Zierblende 13. Nun kann die Zierblende 13 ohne das Trägerprofil galvanisiert werden. Im Anschluß kann die Zierblende dann entweder mit dem Trägerprofil verklebt oder durch Ultraschallschweißen oder ein anderes geeignetes Verfahren stoffschlüssig mit dem Trägerprofil verbunden werden. Der Vorteil hierbei ist, dass Verstärkungsrippen eingebracht werden können, ohne das Risiko, dass diese sich auf der Oberseite abzeichnen.

Vorteil zweiteilig: Eintragung von Verstärkungsrippe ohne Risiko optischer Abzeichnung auf Oberfläche

Das erfindungsgemäße Verfahren erlaubt die einfache Herstellung einer Scheibeneinfassung, ohne dass es das Umbördeln einer metallenen Zierblende bedarf.

## Patentansprüche

1. Scheibeneinfassung für eine Scheibe eines Personenkraftwagens (1), mit mindestens einer Dichtung, die ein oder mehrere Dichtungsprofile (10, 10', 10") umfasst und mit einem mit der Dichtung zusammenwirkenden Trägerprofil (8, 12) aus Kunststoff sowie einer das Trägerprofil abdeckenden Zierblende (9, 13) mit metallischer Sichtfläche (11), **dadurch gekennzeichnet, dass** die Zierblende (9, 13) als Spritzgußteil aus Kunststoff ausgebildet ist, wobei das Trägerprofil (8, 12) und die Zierblende gesonderte Bauteile darstellen, die stoffschlüssig miteinander verbunden sind, und wobei ferner die Sichtfläche (11) der Zierblende galvanisiert ist.

2. Scheibeneinfassung nach Anspruch 1, **dadurch gekennzeichnet, dass** die Zierblende (13) mit dem Trägerprofil (12) verklebt ist.

3. Scheibeneinfassung nach einem der Ansprüche 1 bis 2, **dadurch gekennzeichnet, dass** die Zierblende (13) etwaige Stoßstellen des Trägerprofils (12) überdeckt.

4. Scheibeneinfassung nach einem der Ansprüche 1 bis 3, **dadurch gekennzeichnet, dass** Zierblende (9, 13) und Trägerprofil (8, 12) aus einem ABS-Kunststoff bestehen.

5. Scheibeneinfassung nach einem der Ansprüche 1 bis 4, **dadurch gekennzeichnet, dass** auf der dem Fahrzeug zugewandten Seite der Zierblende Leuchtelemente, vorzugsweise LED's (14) angeordnet sind.

6. Scheibeneinfassung nach einem der Ansprüche 1 bis 5, **dadurch gekennzeichnet, dass** die galvanische Schicht auf der Sichtfläche der Zierblende Unterbrechungen (15) aufweist und die Zierblende (9) selbst aus einem durchscheinenden Kunststoff besteht.

7. Verfahren zum Herstellen einer Scheibeneinfassung nach einem der Ansprüche 1 bis 6, **dadurch gekennzeichnet, dass** das Trägerprofil (8, 12) und die Zierblende (9, 13) als separate Teile spritzgegossen und anschließend stoffschlüssig miteinander verbunden werden und die Sichtfläche der Zierblende aufgeraut, bekeimt und galvanisiert wird.

8. Verfahren zum Herstellen einer Scheibeneinfassung nach einem der Ansprüche 1 bis 6, **dadurch gekennzeichnet, dass** das Trägerprofil (12) und die Zierblende (13) als separate Teile spritzgegossen werden, wonach die Zierblende (13) aufgeraut, bekeimt und galvanisiert wird, wonach Zierblende (13) und Trägerprofil (12) miteinander stoffschlüssig verbunden oder miteinander verklebt werden.

9. Verfahren nach Anspruch 7 oder 8, **dadurch gekennzeichnet, dass** Trägerprofil (12) und Zierblende (13) durch Laserschweißen oder Ultraschallschweißen miteinander verbunden werden.

## Claims

1. Window surround for a window of a passenger vehicle (1), having at least one seal comprising one or more sealing profiles (10, 10', 10") and having a plastic support profile (8, 12) interacting with the seal, and a decorative cover (9, 13) with a metallic visible surface (11) covering the support profile, **characterized in that** the decorative cover (9, 13) is formed as an injection-molded part of plastics, the support profile (8, 12) and the decorative cover are separate components, which are firmly bonded to one another, and the visible surface (11) of the decorative cover being further galvanized.

2. Window surround according to claim 1, **characterized in that** the decorative cover (13) is glued to the support profile (12).

3. Window surround according to one of claims 1 to 2, **characterized in that** the decorative cover (13) covers possible joints of the support profile (12).

4. Window surround according to one of claims 1 to 3, **characterized in that** the decorative cover (9, 13) and support profile (8, 12) consist of an ABS plastic material.

5. Window surround according to one of claims 1 to 4, **characterized in that** light elements, preferably LEDs (14) are arranged on the side of the decorative cover facing the vehicle.

6. Window surround according to one of claims 1 to 5, **characterized in that** the galvanic layer on the visible surface of the decorative cover has interruptions (15) and the decorative cover (9) itself consists of a translucent plastic material.

7. Method for producing a window surround according to one of claims 1 to 6, **characterized in that** the support profile (8, 12) and the decorative cover (9, 13) are injection-molded as separate components and are subsequently firmly bonded together and the visible surface of the decorative cover is roughened, germinated and galvanized.

8. Method for producing a window surround according to one of claims 1 to 6, **characterized in that** the support profile (12) and the decorative cover (13) are injection-molded as separate components, after which the decorative cover (13) is roughened, germinated and galvanized, after which the decorative cover (13) and the support profile (12) are firmly bonded to one another or glued together.

9. Method according to claim 7 or 8, **characterized in that** the support profile (12) and decorative cover (13) are joined together by laser welding or ultrasonic welding.

## Revendications

1. Bordure de fenêtre pour une fenêtre d'une voiture particulière (1), comportant au moins un joint qui comprend un ou plusieurs profils d'étanchéité (10, 10', 10") et un profil de support en matière plastique (8, 12) qui interagit avec le joint de même qu'une garniture décoratifve (9, 13) qui recouvre le profilé de support (8, 12) avec une zone d'observation métallique (e11), **caractérisée en ce que** la garniture décorative (9, 13) est conçu comme une pièce moulée par injection en matière plastique, tandis que le profilé de support (8, 12) et la garniture décorative représentent des composants séparés qui sont reliés entre eux par liaison de substance, et la zone d'observation (11) de la garniture décorative étant également galvanisée.

2. Bordure de fenêtre selon la revendication 1, **caractérisée en ce que** la garniture décorative (13) est collée sur le profilé de support (12).

3. Bordure de fenêtre selon l'une des revendications 1 à 2, **caractérisée en ce que** la garniture décorative (13) recouvre les joints éventuels du profilé de support (12).

4. Bordure de fenêtre selon l'une des revendications 1 à 3, **caractérisée en ce que la** garniture décorative (9, 13) et le profilé de support (8, 12) sont en plastique ABS.

5. Bordure de fenêtre selon l'une des revendications 1 à 4, **caractérisée en ce que des** éléments d'éclairage, de préférence des LED (14), sont disposés sur le côté de la garniture décorative tournée vers le véhicule.

6. Bordure de fenêtre selon l'une des revendications 1 à 5, **caractérisée en ce que** la couche galvanique sur la zone d'observation de la garniture décoratvef présente des interruptions (15) et la garniture décorative (9) elle-même est constituée d'un plastique translucide.

7. Procédé de fabrication d'une bordure de fenêtre selon l'une des revendications 1 à 6, **caractérisée en ce que** le profilé de support (8, 12) et la garniture décorative (9, 13) sont moulés par injection en tant que pièces séparées et sont ensuite assemblés par liaison de substance et la zone d'observation de la garniture décorative est rendue rugueuse, ensemencée et galvanisée.

8. Procédé de fabrication d'une fenêtre selon l'une des revendications 1 à 6, **caractérisée en ce que** le profilé de support (12) et le garniture décorative (13) sont moulés par injection en tant que pièces séparées, après quoi la garniture décorative (13) est rugueuse, ensemencée et galvanisée, après quoi la garniture décorative (13) et le profilé de support (12) sont reliés entre eux par liaison de substance ou collés l'un à l'autre.

9. Procédé selon les revendications 7 ou 8, **caractérisé en ce que le** profilé de support (12) et la garniture décorative (13) sont assemblés par soudage au laser ou par soudage aux ultrasons.
